# EUROPEAN PATENT APPLICATION

(11) **EP 4 455 176 A1**
(43) Date of publication of application: **30.10.2024**
(21) Application number: 23170697.9
(22) Date of filing: 28.04.2023
(51) Int. Cl.: C08F 290/06, C08F 283/00, C08G 18/10, C08G 18/28, C08G 77/442, C08L 83/12, C08G 77/46, C08G 18/61, C08G 18/75

(54) **WATER-SOLUBLE POLYMERIC STRUCTURE AND WATER-SOLUBLE POLYMERIC STRUCTURE PREPARATION METHOD**

(71) Applicant: CHT Turkey Kimya Sanayi ve Ticaret A.S., Istanbul (TR)
(72) Inventor: AKBULUT, Huseyin, Istanbul (TR); CELIKBAS, Sena, Istanbul (TR); OBUROGLU, Nur, Istanbul (TR); KURT, Mustafa, Istanbul (TR)
(74) Representative: Yavuzcan, Alev

(57) **Abstract**

In particular, the invention relates to a water-soluble polymeric structure used as an emulsifier and a water-soluble crosslinker which includes anionic and cationic crosslinkers, for synthesizing of acrylic emulsions prepared with hydrophobic monomers, and to a method of preparing such water-soluble polymeric structure.

## Description

### Technical Field

The invention relates to a water-soluble polymeric structure used as an emulsifier crosslinker in both anionic and cationic form and to a method of preparing the polymeric structure.

In particular, the invention relates to a water-soluble polymeric structure used as an emulsifier and a water-soluble crosslinker which includes anionic and cationic crosslinkers, for synthesizing of acrylic emulsions prepared with hydrophobic monomers, and to a method of preparing such water-soluble polymeric structure.

### State of the Art

Waterborne systems such as polyester dispersions (PED), polyacrylate emulsions (PAE), and waterborne polyurethanes (WPU) are employed as environmentally friendly, water-based coatings and adhesives. An efficient, fast, stable and safe crosslinking strategy is always desirable to impart waterborne polymers with improved mechanical properties, and water/solvent/thermal resistance. Crosslinking is the term used to refer to "bridging or interconnecting of polymeric structures or compounds" through the ionic or covalent bond and it finds many applications in broad range of areas from thermosets to thermoplastics. Simply, crosslinking involves a chemical reaction between polymer chains to link them together to add unique properties to final polymer such as abrasion resistance, flexibility, toughness, chemical resistance etc.

Currently available crosslinking strategies for waterborne polymers are mainly based on crosslinking during the polymerization step. Despite fact that crosslinking offers tremendous advantages, its excessive use reduces water solubility and makes it unlikely to achieve stable emulsion or dispersions. Conventional water insoluble or soluble crosslinker with acrylate (methacrylate) functionality, has limitation in their amount of usage, wherein, excess crosslinker ratio to monomer causing the destruction of emulsion stability and in some cases, the crosslinkers can polymerize among themselves due to the phase separation and their high reactivity. In this concept, another strategy for crosslinking called as post-polymerization crosslinking method can be used. However, post-polymerization crosslinking methods such as N-methylolacrylamide (NMA), acetoacetoxyethyl methacrylate (AAEM), keto-hydrazides etc. also suffer from stability problems and some risks to human health. Therefore, the stability problems that emulsions suffer due to excessive use of crosslinkers in waterborne systems can cause risks for environment and also for human health.

A water-based two-component polyurethane dispersion which may be useful for coating and waterproofing applications, and also to a process for the preparation of the dispersion and to a water-resistant coating substance comprising said dispersion are disclosed in a patent document EA023159B1 in the known state of the art. The water-based two-component polyurethane dispersion is prepared from: (a) an aqueous polymer emulsion comprising, as separate components, one or more acrylic polymers and one or more polyols, wherein the acrylic polymer has a Tg lower than about 20°C, wherein polyol includes polyester-based polyester diols, polyether-based polyesher diols, polycarbonate polyols, alkylene polyols or combinations thereof, and wherein the ratio between the acrylic polymer and polyol in the aqueous polymer emulsion is in the range of 1-10: 1; and (b) one or more isocyanates. The water-based two-component polyurethane dispersion is prepared by combining the aqueous polymer emulsion and one or more isocyanates. The technical result in said document provides preparing the water-based two-component polyurethane dispersion with desirable chemical and physical properties depending on the intended sphere of application. The document does not mention a water-soluble polymeric structure which can be synthesized in both anionic and cationic form and can be used as water soluble crosslinkers and emulsifier for synthesizing of acrylic emulsions or method of producing such polymeric structure.

Another patent document JPH05117310A of the known art discloses a preparation method of an imidized SMA modified cationic styrene-acrylic emulsion. The product obtained by the method is mainly prepared by cationic emulsion polymerization of imidized SMA quaternary ammonium salt, styrene, acrylic monomer containing carboxy group, acrylic monomer containing hydroxyl group and acrylic monomer obtained by free radical polymerization. According to the document, the prepared imidized SMA modified cationic styrene-acrylic emulsion, due to the introduction of imidized SMA functional resin, temperature resistance, alkali resistance, wear resistance, compatibility, water resistance and excellent adhesive force of a film can be effectively raised, and particle size of the emulsion reaches nanoscale (being less than or equal to 280 nm). Thus, the cationic styrene-acrylic emulsion is a nano-microemulsion, has very strong permeability, and can react with an alkaline substance. The emulsion is widely used in seal primers for interior and exterior walls, water-based paints, water-borne wood sealing primers, water-based ink, sizing agents, adhesives and the like. The document does not mention a water-soluble polymeric structure which can be synthesized in both anionic and cationic form and can be used as water soluble crosslinkers and emulsifier for synthesizing of acrylic emulsions or method of producing such polymeric structure.

As a result, there is a need to develop a polymeric structure that contain ionic and water-insoluble groups, act as an emulsifier, and also polymerize and join the polymer structure with other acrylic or methacrylic monomers for synthesizing of acrylic emulsions prepared with hydrophobic monomers, and water-soluble polymeric structure preparation method that enables the synthesis of the water-soluble anionic/cationic polymeric structures used as water soluble crosslinkers and emulsifier for the production of acrylic emulsions.

### Purpose of the Invention

The present invention relates to a water-soluble polymeric structure and a method of preparing the water-soluble polymeric structure, which fulfills the above-mentioned requirements, eliminates possible disadvantages and provides some additional advantages.

The main purpose of the inventive water-soluble polymeric structure and water-soluble polymeric structure preparation method is to obtain a water-soluble polymeric structure that contain ionic and water-insoluble groups, act as an emulsifier, and also polymerize and join the polymer structure with other acrylic or methacrylic monomers and a preparation method of water-soluble polymeric structures which are synthesized in both anionic and cationic form, used as water soluble crosslinkers and emulsifier for the synthesis of acrylic emulsions prepared with hydrophobic monomers.

Another object of the invention is to provide a water-soluble polymeric structure and a method of preparation thereof, preparing the water-soluble emulsifier crosslinker including anionic crosslinkers which having maleic acid ester terminated water insoluble polymers synthesized and neutralized with tertiary amine derivatives, and cationic crosslinkers which having tertiary amine group attached to water insoluble polymer with urethane linkage and neutralized with acid derivatives.

Another object of the invention is to provide a water-soluble polymeric structure and a method of preparation thereof, synthesizing polymeric crosslinkers in anionic and cationic form using water-insoluble hydroxy-terminated polymers and a method which enables the emulsions of acrylate-polyol hybrid polymer to be prepared with combination of variety of hydrophobic polymerizable monomer without need for surface-active or any other additives.

Another object of the invention is to provide a water-soluble polymeric structure and a method of preparation thereof, increasing the amount of crosslinker in water-soluble system to cause an increase in the ionic groups, thus eliminating the problems experienced in water-based systems related to excess crosslinking ratio.

Another object of the invention is to provide a water-soluble polymeric structure and a method of preparation thereof, using the maleic acid ester functional water-insoluble polymers as crosslinkers to eliminate the possibility of self-polymerization of crosslinker.

Another object of the invention is to provide a water-soluble polymeric structure and a method of preparation thereof, enabling the homogeneous distribution of monomers and crosslinkers on main polymeric structure and the neutralized maleic acid ester functional polymers also behave as emulsifier to emulsify the water insoluble monomers during the emulsion polymerization.

Another object of the invention is to provide a water-soluble polymeric structure and a method of preparation thereof, obtaining an efficient, fast, stable and safe crosslinking strategy to impart waterborne polymers with improved mechanical properties, and water/solvent/thermal resistance.

In order to achieve the above objects in the most general form, a water-soluble polymeric structure developed with the present invention, which is suitable for use as an emulsifier and a water-soluble crosslinker in both anionic and cationic form, for synthesizing of acrylic emulsions, prepared with hydrophobic monomers, comprising at least one maleic acid ester functional crosslinker, at least one tertiary amine functional crosslinker, characterized in that the maleic acid ester terminated water insoluble polymers are synthesized and neutralized with tertiary amine derivatives, and tertiary amine group attached to water insoluble polymer with urethane linkage and neutralized with acid derivatives.

A method of preparing a water-soluble polymeric structure for synthesizing a water-soluble polymeric structure developed by the present invention, which uses the maleic acid ester functional water-insoluble polymers as crosslinkers to eliminate the possibility of self-polymerization of crosslinker, the method comprising the steps of obtaining maleic acid ester functional crosslinker-1 by adding Dihydroxy terminated polymer derivatives and reacting them with maleic anhydride, making a homogenous mixture Styrene and Butyl Acrylate as hydrophobic monomers and maleic acid ester functional polymer crosslinker-1 solution which was prepared at room temperature and without using any surface-active additives.

The structural and characteristic features and all advantages of the invention will be more clearly understood by means of the figures given below and the detailed description written by making references to these figures, and therefore, the evaluation should be made by considering these figures and detailed description.

### Detailed Description of the Invention

In this detailed description, the preferred embodiments of the inventive water-soluble polymeric structure and a method of preparing the water-soluble polymeric structure are described only for a better understanding of the subject matter.

A water-soluble polymeric structure developed in accordance with the present invention, suitable for use as an emulsifier and a water-soluble crosslinker in both anionic and cationic form, for synthesizing of acrylic emulsions, preferably suitable for synthesizing of anionic and cationic acrylate-polyol hybrid emulsions, prepared with hydrophobic monomers, preferably Styrene and Butyl Acrylate are chosen as hydrophobic monomers, comprising at least one maleic acid ester functional crosslinker, at least one tertiary amine functional crosslinker, preferably Dihydroxy terminated polymer derivatives which is reacted with maleic anhydride with or without a tertiary amine catalyst; characterized in that the maleic acid ester terminated water insoluble polymers are synthesized and neutralized with tertiary amine derivatives, and tertiary amine group attached to water insoluble polymer with urethane linkage and neutralized with acid derivatives.

In an exemplary embodiment of the water-soluble polymeric structure developed with the present invention, Dihydroxy terminated polymer derivatives react with maleic anhydride in the presence of tertiary amine catalyst to increase reaction yield. These catalysts are also yielding the acid salt with maleic acid moiety after ring opening reaction with maleic anhydride to provide water solubility. This reaction can be performed using only Dihydroxy terminated polymer derivatives and maleic anhydride without tertiary amine catalyst, after that neuralization can be done with different bases such as metal hydroxy salts etc. In this case, the reaction cannot be conducted at lower temperature than 70°C and high temperature is causing the sublimation of maleic anhydride upside of the reaction vessel or in distillation system and the reaction time will be prolonged. Graph-1 shows the synthetic pathway for maleic acid ester functional crosslinker-1 described in the present invention. Dihydroxy terminated polymer derivatives react with maleic anhydride in the presence of tertiary amine catalyst to increase reaction yield.

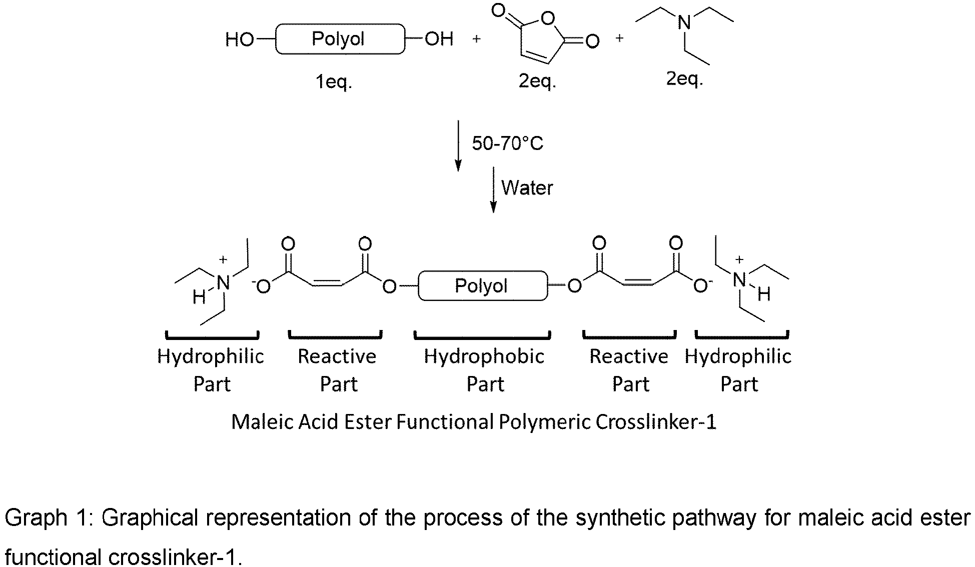

As mentioned above, maleic moiety in the polymeric crosslinker-1 is prone to copolymerization with other hydrophobic monomers and result in the homogenous distribution of ionic parts in main polymer chain and the formation of stable emulsion of crosslinked polymer. Garph-2, show the synthetic pathway of hydrophobic monomers and their homogenous mixture with maleic acid ester functional polymer crosslinker-1 solution, where Styrene and Butyl Acrylate are chosen as hydrophobic monomers and the mixture is prepared at room temperature without any surface-active additives.

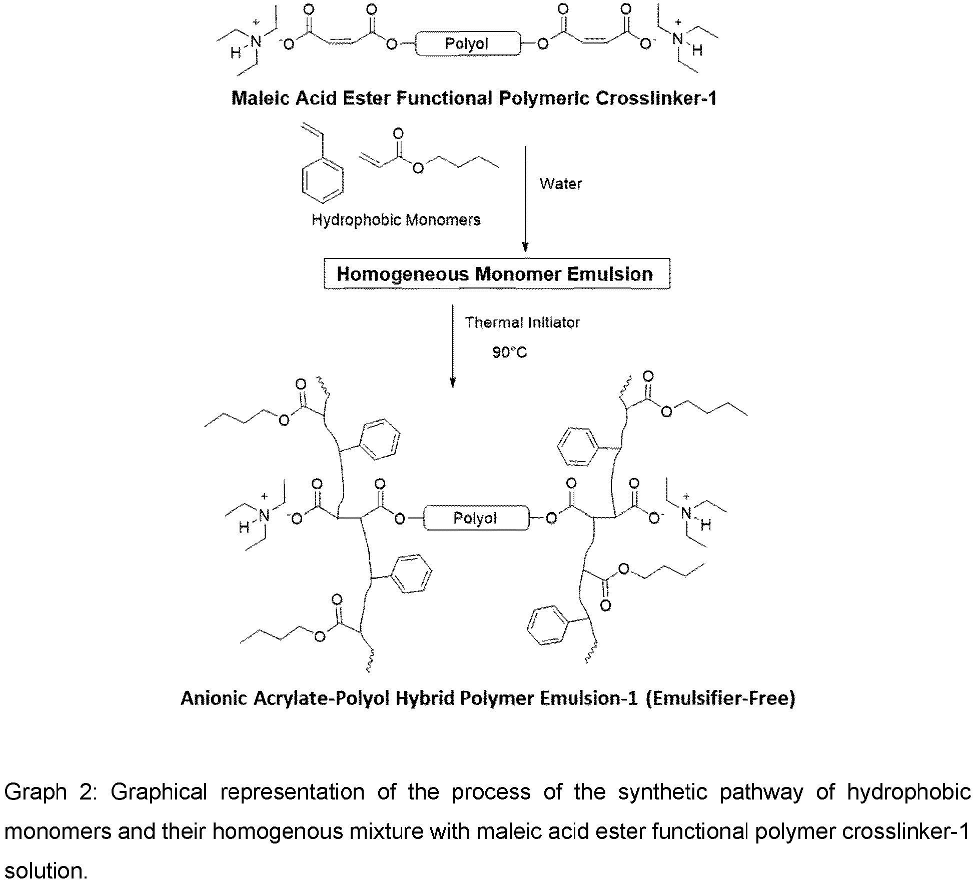

Also, cationic crosslinkers for the preparation of acrylic emulsions based on the tertiary amine functionality on polymer are described. It is quite apparent to those skilled in art that the tertiary amine functional structures can act as polymerization promoter. The mechanism of their promoting ability reported in some studies of Huang et al. (Cem. Concr. Compos. 93 (2018) 323-330) and Zhang et al. (Eur. Polym. J. 128 (2020) 109610), explain that tertiary amino groups of Dimethylaminoethyl Methacrylate (DMAEMA) as an example of tertiary amine functional polymerizable monomer, forming a redox pair with Potassium Persulfate as radical source, plays a key role in the initiating and starting chain transfer reaction to form network polymer. In the present invention, hydroxy functional tertiary amine reacted with isocyanate terminated polyol derivatives to yield tertiary amine terminated polyurethanes. After neutralization with acids, this cationic polymer can easily emulsify the hydrophobic monomer in water and their emulsion polymerization yield the stable emulsifier-free cationic Acrylate-Polyol Hybrid Polymer Emulsion illustrated in Graph-3.

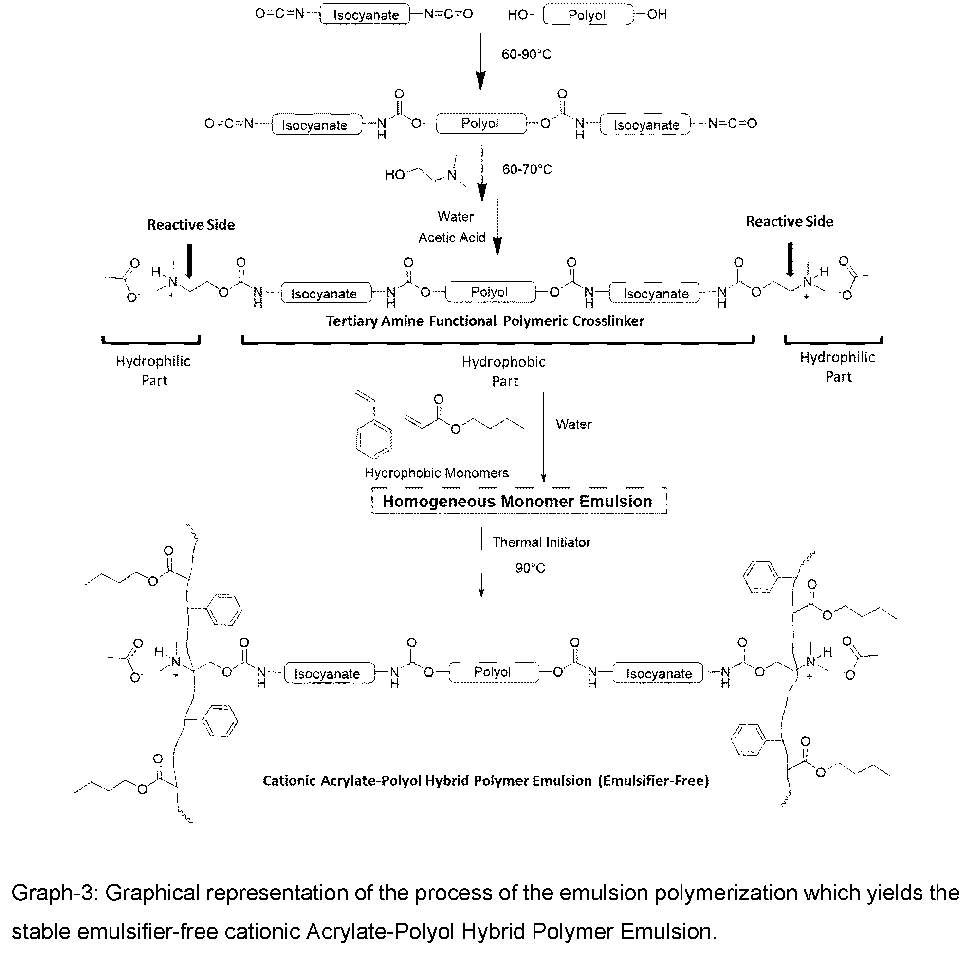

In another preferred embodiment of the invention, particularly anionic and cationic acrylate-polyol hybrid emulsions, the ratio of maleic acid ester functional crosslinkers or tertiary amine functional crosslinkers to hydrophobic monomers can be optional, preferably about 5mass% to 50mass% but not limited. Interestingly, all crosslinker systems described herein, has special properties related to their ionic content. When ratio of conventional crosslinkers is increased in monomer composition, normally solubility of polymer has to be decreased or totally finished. However, the crosslinkers disclosed in the present invention, provide water solubility as well as crosslinking which is decreasing the solubility. Therefore, the ratio and type of crosslinkers and monomer compositions are very critical to reach desired properties for application.

The method of preparing water-soluble polymeric suitable for use as an emulsifier and a water-soluble crosslinker in both anionic and cationic form, for synthesizing of acrylic emulsions, prepared with hydrophobic monomers, which uses the maleic acid ester functional water-insoluble polymers as crosslinkers to eliminate the possibility of self-polymerization of crosslinker, preferably the homogeneous distribution of monomers and crosslinkers on main polymeric structure are enabled, and the neutralized maleic acid ester functional polymers are also behaved as emulsifier to emulsify the water insoluble monomers during the emulsion polymerization, the method comprising the steps of obtaining maleic acid ester functional crosslinker-1 by adding Dihydroxy terminated polymer derivatives and reacting them with maleic anhydride in the presence of tertiary amine catalyst to increase reaction yield, preferably catalysts also yields the acid salt with maleic acid moiety after ring opening reaction with maleic anhydride to provide water solubility, preferably performing the reaction by using only Dihydroxy terminated polymer derivatives and maleic anhydride without tertiary amine catalyst, preferably neutralizing with different bases such as metal hydroxy salts and conducting the reaction at a higher temperature than 70°C which causes the sublimation of maleic anhydride upside of the reaction vessel or in distillation system and prolongs the reaction time; making a homogenous mixture Styrene and Butyl Acrylate as hydrophobic monomers and maleic acid ester functional polymer crosslinker-1 solution which was prepared at room temperature and without using any surface-active additives, preferably copolymerizing maleic acid ester functional polymer crosslinker-1 with other hydrophobic monomers and obtaining homogenous distribution of ionic parts in main polymer chain and forming a stable emulsion of crosslinked polymer, preferably obtaining carboxylic acid functional polyols by performing esterification reactions between water insoluble polyol and Di-functional activated carboxylic acid derivatives known as di-anhydrides, preferably adjusting the molar ratio of polyol and di-anhydride derivatives in mol Hydroxy: mol Anhydride equal to 2 or less, preferably adding hydroxy functional tertiary amine which reacts with isocyanate terminated polyol derivatives to yield tertiary amine terminated polyurethanes, emulsifying the hydrophobic monomer in water by the cationic polymer, after neutralizing with acids, wherein the emulsion polymerization yields the stable emulsifier-free cationic Acrylate-Polyol Hybrid Polymer Emulsion, preferably making the ratio of maleic acid ester functional crosslinkers or tertiary amine functional crosslinkers to hydrophobic monomers between 5mass% to 50mass%, preferably preparing the emulsion by initiating the polymerizations by a polymerization initiator, preferably initiating the polymerizations by a polymerization initiator, preferable water-soluble polymerization initiators, wherein the polymerization initiator is not particularly limited and only needs to be one generally used for the polymerization of an unsaturated monomer in aqueous media.

Comparing to acrylate-based monomers, maleic anhydride or ester derivatives are so well known with their reluctance to the self-addition due to the stearic hindrance, polar effects, electron deficiency on double bond etc., retard or prohibit the homopolymerizability of this 1,2-disubstituted olefins. On the other hand, Maleic moiety has remarkable readiness to enter into copolymerization with a wide variety of monomers. Therefore, the present invention uses the maleic acid ester functional water-insoluble polymers as crosslinkers to eliminate the possibility of self-polymerization of crosslinker. This method also enables the homogeneous distribution of monomers and crosslinkers on main polymeric structure and the neutralized maleic acid ester functional polymers also behave as emulsifier to emulsify the water insoluble monomers during the emulsion polymerization.

In another preferred embodiment of the invention, functionalization of only end groups of polyols with maleic anhydride in case of using extremely hydrophobic monomers or polyols is not enough to obtain stable emulsion without surface active additives. Therefore, to obtain carboxylic acid functional polyols, the esterification reactions were performed between water insoluble polyol and Di-functional activated carboxylic acid derivatives known as di-anhydrides shown Garph-4. The molar ratio of polyol and di-anhydride derivatives was adjusted in mol Hydroxy: mol Anhydride equal to about 2 or less. It is essential that molar ratio of hydroxy groups is limited to maximum 2 since final carboxylic acid functional polymer should have enough number of hydroxy groups for further polymerization and the deterioration of this ratio can lead to increase in molecular weight with higher polydispersity index due to the lack of selectivity in reaction. These carboxylic acid and maleic acid functional highly hydrophobic polyols and same type of hydrophobic monomers were homogeneously emulsified, and the polymerization was performed successfully to yield stable acrylate-polyol hydride polymer emulsion-1.

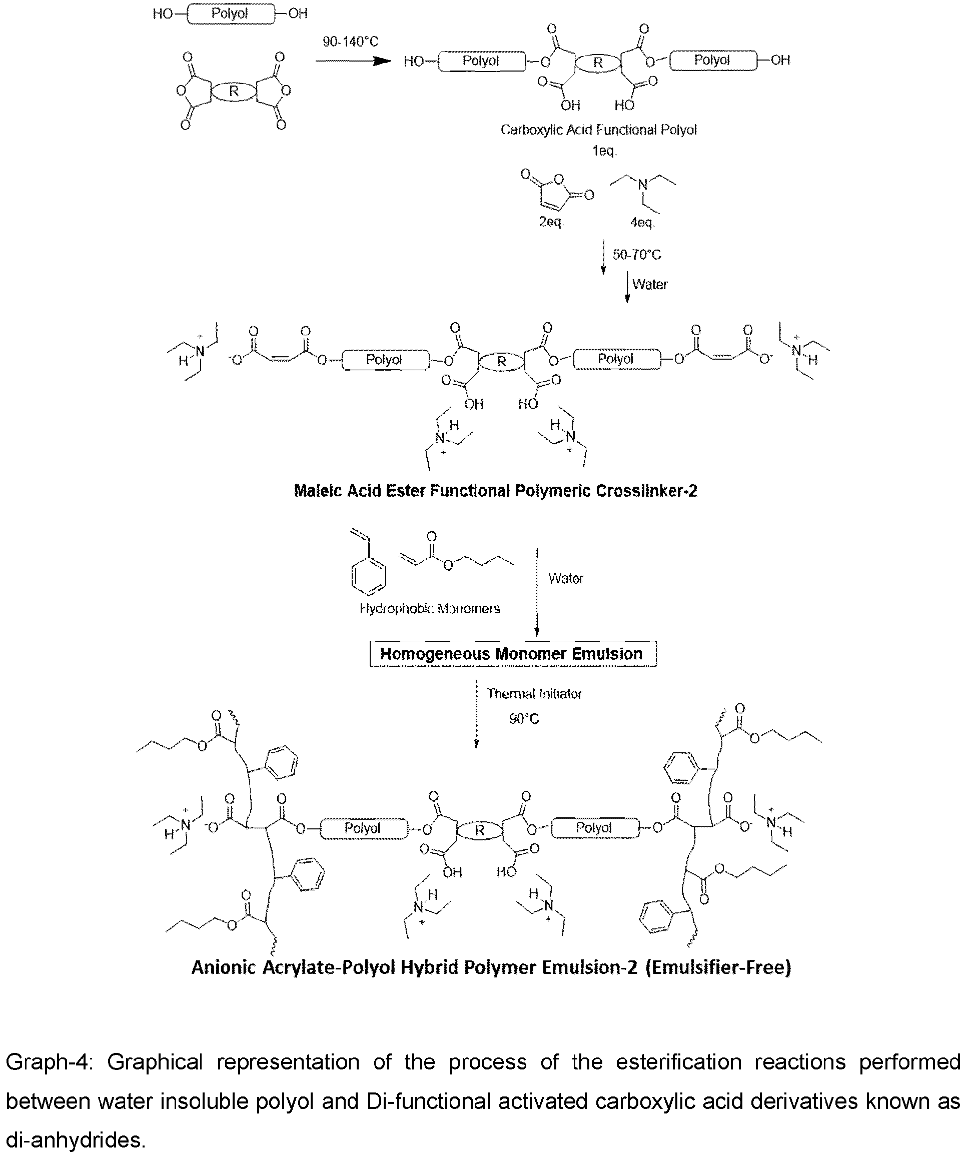

In another preferred embodiment of the invention, polyols derivatives for the synthesis of the cationic and anionic crosslinkers mentioned above, are selected from di-hydroxy terminated polyesters, polycaprolactone, polycarbonates, polyether's, polydimethylsiloxanes, polyethylene's, polybutadienes and similar polyol derivatives a molecular weight in the range of about 1000 to about 100000 Dalton and a melting point lower than 100°C but is not limited.

In another preferred embodiment of the invention, tertiary amine derivatives used for the neutralization of obtained maleic-acid-ester-based crosslinkers mentioned above, are selected from non-hydroxy functional tertiary amine derivatives without nucleophilic feature such as trimethyl amine, triethyl amine, tributyl amine, triisobutyl amine, aniline, 1,4-dimethylpiperazine and all related mono, di and multi tertiary amine functional non-nucleophilic amine derivatives but is not limited.

In another preferred embodiment of the invention, Di-functional activated carboxylic acids are selected from Di-anhydride derivatives such as 3,3',4,4'-Benzophenonetetracarboxylic dianhydride, 4,4'-Biphthalic Anhydride, 3,4,9,10-Perylenetetracarboxylic 3,4:9,10-dianhydride, Cyclobutane-1,2,3,4-tetracarboxylic dianhydride, 3,3',4,4'-Biphenyltetracarboxylic dianhydride, Benzophenone-3,3',4,4'-tetracarboxylic dianhydride, Bicyclo[2.2.2]oct-7-ene-2,3,5,6-tetracarboxylic dianhydride, 1,4,5,8-Naphthalenetetracarboxylic dianhydride, Tetrahydrofuran-2,3,4,5-tetracarboxylic Acid, Pyromellitic dianhydride, Perylene-3,4,9,10-tetracarboxylic dianhydride, 4,4'-Oxydiphthalic anhydride, 4,4'-(4,4'-Isopropylidenediphenoxy)bis(phthalic anhydride), and all related di-anhydride derivatives but is not limited.

In another preferred embodiment of the invention, preferred di-isocyanate functional agents are selected from mainly commercially available isocyanates such as Hexamethylene diisocyanate, Isophorone diisocyanate, Toluene 2,4-diisocyanate, 1,3-Phenylene diisocyanate, Diphenylmethane 4,4'-diisocyanate, Tolylene-2,4-diisocyanate, Tolylene-2,6-diisocyanate, 1,4-Phenylene diisocyanate, m-Xylylene diisocyanate, trans-1,4-Cyclohexylene diisocyanate, Poly(propylene glycol), tolylene 2,4-diisocyanate terminated, 3,3'-Dimethyl-4,4'-Biphenyl Diisocyanate, 1,4-Diisocyanatobutane, 1,12-Diisocyanatododecane, Tolylene-2,6-diisocyanate, 2-Methyl-m-phenylene diisocyanate, 1,3-Bis(1-isocyanato-1-methylethyl)benzene, 1,3-Bis(isocyanatomethyl) cyclohexane and all related di-isocyanate and di-isocyanate functional polymer derivatives but is not limited.

In another preferred embodiment of the invention, the hydrophobic monomers are selected form the combination of styrene and its derivatives and ethylenically unsaturated monomers which include esters of acrylic and methacrylic acid, i.e., the reaction product of acrylic and methacrylic acid and C1-C150 alcohols such as Tert-Butyl Acrylate, Butyl Acrylate, Butyl Methacrylate, Isodecyl Acrylate, Isodecyl Methacrylate, Stearyl Methacrylate, Stearyl acrylate and all related hydrophobic monomers but is not limited.

In the preparation steps of emulsions described herein, the polymerizations are initiated by a polymerization initiator, preferable water-soluble polymerization initiators, and the polymerization initiator is not particularly limited and only needs to be one generally used for the polymerization of an unsaturated monomer in aqueous media. A water-soluble redox initiator such as hydrogen peroxide and a reducing agent such as an iron (II) salt, a persulfate or sodium hydrogen sulfite, ascorbic acid, sodium formaldehyde sulfoxylate, sodium disulfate or sodium dithionite and related derivatives but is not limited. It is preferable to further use an organic peroxide include tert-butyl hydroperoxide, benzoyl peroxide and dicumyl peroxide and all related derivatives and their combinations with reducing agent mentioned above but is not limited. Water soluble azo initiator can be preferred to initiate polymerization, such as 2,2'-Azobis[2-methyl-N-(2-hydroxyethyl) propionamide], 2,2'-Azobis(2-methylpropionamidine) dihydrochloride, 2,2'-Azobis[2-(2-imidazolin-2-yl) propane] dihydrochloride, 4,4'-Azobis (4-cyanovaleric acid), 2,2'-Azobis[N-(2-carboxyethyl)-2-methylpropionamidine] tetrahydrate and all related derivatives but is not limited.

In another embodiment of the invention, for the synthesis of tertiary amine functional crosslinker, nucleophilic group contained tertiary amines functional agents are selected from hydroxy functional tertiary amines and primary/secondary amine functional tertiary amine agents such as dimethylethanol amine, diethylethanol amine, dibutylethanol amine, diisoproylethanol amine, diisobutylethanol amine, Dimethylaminopropylamine and all related amine or hydroxy functional tertiary amine derivatives but is not limited.

The synthetic strategy disclosed in the present invention to produce waterborne anionic/cationic emulsifier crosslinkers can easily be diversified to limitless derivatives by changing the ratios and types of polyols, di-anhydrides, di-isocyanates, hydroxy functional tertiary amines or monomers, the type of neutralization agents and thermal initiators mentioned-above, the solid content of the obtained dispersions. Additionally, the diversification of products can also be achieved by mixing commercially available different acrylate, polyurethane dispersions/emulsions.

### Example-1

### The Synthesis of Maleic Acid Ester Functional Crosslinker-1:

100g of Polydimethylsiloxane having hydroxy-terminated polyether groups in α, w-position (IM-22 WACKER, Hydroxyl Value= 1.071mmolOH/g), 10,5 g maleic anhydride and 10.9g of triethyl amine were placed to reaction vessel and stirred at 70°C about 1 hour until all anhydride peaks in FTIR disappeared. Then, 360g of water was added to reaction mixture to yield dispersion. Slightly brownish transparent dispersion (Solid Content= 25%).

### Example-2

### The Synthesis of Anionic Acrylate-Polyol Hybrid Polymer Emulsion-1:

In a reaction vessel equipped with a mechanical stirrer, a cooling system, a nitrogen introduction pipe, a thermometer and a dropping funnel, 400g of Aqueous Solution of Maleic Acid Ester Functional Crosslinker-1 (Example-1), 70g of Butyl Acrylate, 30g Styrene and 50g of water are placed and stirred at room temperature until homogenous mixture obtained. Then, the mixture was heated to 90°C and 2g of Ammonium Persulfate dissolved in 100g of water was added dropwise through the dropping funnel over a period of 3 hours at 90°C while stirring at 200rpm. Then, the reaction mixture was stirred for extra hour at 90°C. Finally, 1g of tert-butyl hydroperoxide that was a free-radical initiator was added, stirring was further carried out for 2 hours at 90°C to complete the reaction. Slightly yellow-blue semitransparent emulsion was obtained (Solid Content= 30%).

### Example-3

### The Synthesis of Maleic Acid Ester Functional Crosslinker-2:

100G of Polydimethylsiloxane having hydroxy-terminated polyether groups in α, w-position (IM-22 WACKER, Hydroxyl Value= 1.071mmolOH/g) and 7.85g of 4,4'-Biphthalic Anhydride were stirred and heated to 120°C under the inert atmosphere about 2 hours. Final polymer was analyzed by FTIR to observe the anhydride peaks until their total disappearance. Acid value for carboxylic acid functional polyol was around 0.9 mmol Acid/g). Then, the reaction mixture was cooled down to 50°C, 5,2g of Maleic Anhydride and 5.4g of Triethylamine were added to reaction vessel, stirred at 70°C until their total disappearance of anhydride peaks in FTIR. 360g of water was added to the mixture to obtain crosslinker solution (Solid Content= 25%).

### Example-4

### The Synthesis of Anionic Acrylate-Polyol Hybrid Polymer Emulsion-2:

With same reaction system and equipment in Example-2, 400g of Maleic Acid Ester Functional Crosslinker-2 (Example-3), 70g of Butyl Acrylate, 30g Styrene and 50g of water are placed and stirred at room temperature until homogenous mixture obtained. Then, same polymerization procedure was followed with Example-2. Slightly yellow-blue semitransparent emulsion was obtained (Solid Content= 30%).

### Example-5

### The Synthesis of Tertiary Amine Functional Polymeric Crosslinker:

With same reaction system and equipment in Example-2, 100G of Polydimethylsiloxane having hydroxy-terminated polyether groups in α, w-position (IM-22 WACKER, Hydroxyl Value= 1.071mmolOH/g) and 23,8g Isophorone diisocyanate mixed and stirred at 90°C about 2 hours until the isocyanate peaks stabilize in FTIR. Then, 9,6g of Dimethylethanolamine was added dropwise at 80°C and the reaction mixture was stirred for extra hour at 90°C until the isocyanate peaks disappeared in FTIR. Then, 6,5g Acetic Acid and 420g of water were added to reaction mixture to yield the dispersion of cationic crosslinker. White-Blue appearance (Solid Content= 25%).

### Example-6

### The Synthesis of Cationic Acrylate-Polyol Hybrid Polymer Emulsion:

With same reaction system and equipment in Example-2, 400g of Tertiary Amine Functional Polymeric Crosslinker (Example-5), 70g of Butyl Acrylate, 30g Styrene and 50g of water are placed and stirred at room temperature until homogenous mixture obtained. Then, same polymerization procedure was followed with Example-2. Slightly white-blue emulsion was obtained (Solid Content= 30%).

The compositions of the present invention and their possible modifications, substitutions and derivatives as waterborne polymeric emulsifier crosslinkers have clear potential to find applications in the formulation of uncountable number of products, binder and crosslinking system for textile, construction and any type of coating sectors and not intended to be exhaustive or to limit the invention to the precise forms or applications.

Other possible embodiments of this invention will be apparent to those skilled in the art upon consideration of this finding or from practice of the invention disclosed herein. While certain features of the invention have been illustrated and described herein, many modifications, substitutions, changes the principles, and equivalents will now occur to those of ordinary skill in the art. It is, therefore, to be understood that the appended claims are intended to cover all such modifications and changes as fall within the true spirit of the invention.

## Claims

1. A water-soluble polymeric structure suitable for use as an emulsifier and a water-soluble crosslinker in both anionic and cationic form, for synthesizing of acrylic emulsions, prepared with hydrophobic monomers comprising:
- at least one maleic acid ester functional crosslinker,
- at least one tertiary amine functional crosslinker,
- **characterized in that** the maleic acid ester terminated water insoluble polymers are synthesized and neutralized with tertiary amine derivatives, and tertiary amine group attached to water insoluble polymer with urethane linkage and neutralized with acid derivatives.

2. A water-soluble polymeric structure as claimed in claim 1, wherein the polymeric structure is suitable for synthesizing of anionic and cationic acrylate-polyol hybrid emulsions.

3. A water-soluble polymeric structure as claimed in claim 1, wherein the hydrophobic monomers are Styrene and Butyl Acrylate.

4. A water-soluble polymeric structure as claimed in claim 1, wherein the polymeric structure comprising Dihydroxy terminated polymer derivatives which is reacted with maleic anhydride with or without a tertiary amine catalyst.

5. A method of preparing a water-soluble polymeric structure suitable as claimed in any one of the preceding claims, which uses the maleic acid ester functional water-insoluble polymers as crosslinkers to eliminate the possibility of self-polymerization of crosslinker, the method comprising the steps of:
- obtaining maleic acid ester functional crosslinker-1 by adding Dihydroxy terminated polymer derivatives and reacting them with maleic anhydride,
- making a homogenous mixture Styrene and Butyl Acrylate as hydrophobic monomers and maleic acid ester functional polymer crosslinker-1 solution which was prepared at room temperature and without using any surface-active additives.

6. A method of preparing a water-soluble polymeric structure as claimed in claim 5, wherein the homogeneous distribution of monomers and crosslinkers on main polymeric structure are enabled, and the neutralized maleic acid ester functional polymers are also behaved as emulsifier to emulsify the water insoluble monomers during the emulsion polymerization.

7. A method of preparing a water-soluble polymeric structure as claimed in claim 5, comprising the step of obtaining maleic acid ester functional crosslinker-1 by adding Dihydroxy terminated polymer derivatives and reacting them with maleic anhydride in the presence of tertiary amine catalyst to increase reaction yield.

8. A method of preparing a water-soluble polymeric structure claimed in claim 7, wherein the catalyst also yields the acid salt with maleic acid moiety after ring opening reaction with maleic anhydride to provide water solubility.

9. A method of preparing a water-soluble polymeric structure as claimed in claim 5, comprising the step of neutralizing with different bases such as metal hydroxy salts and conducting the reaction at a higher temperature than 70°C which causes the sublimation of maleic anhydride upside of the reaction vessel or in distillation system and prolongs the reaction time.

10. A method of preparing a water-soluble polymeric structure as claimed in claim 5, comprising the step of copolymerizing maleic acid ester functional polymer crosslinker-1 with other hydrophobic monomers and obtaining homogenous distribution of ionic parts in main polymer chain and forming a stable emulsion of crosslinked polymer.

11. A method of preparing a water-soluble polymeric structure as claimed in claim 5, comprising the step of obtaining carboxylic acid functional polyols by performing esterification reactions between water insoluble polyol and Di-functional activated carboxylic acid derivatives known as di-anhydrides.

12. A method of preparing a water-soluble polymeric structure as claimed in claim 5, comprising the step of adjusting the molar ratio of polyol and di-anhydride derivatives in mol Hydroxy: mol Anhydride equal to 2 or less.

13. A method of preparing a water-soluble polymeric structure as claimed in claim 5, comprising the step of adding hydroxy functional tertiary amine which reacts with isocyanate terminated polyol derivatives to yield tertiary amine terminated polyurethanes, emulsifying the hydrophobic monomer in water by the cationic polymer, after neutralizing with acids, wherein the emulsion polymerization yields the stable emulsifier-free cationic Acrylate-Polyol Hybrid Polymer Emulsion.

14. A method of preparing a water-soluble polymeric structure as claimed in claim 5, comprising the step of making the ratio of maleic acid ester functional crosslinkers or tertiary amine functional crosslinkers to hydrophobic monomers between 5-50% by mess.

15. A method of preparing a water-soluble polymeric structure as claimed in claim 5, comprising the step of preparing the emulsion by initiating the polymerizations by a polymerization initiator.

16. A method of preparing a water-soluble polymeric structure as claimed in claim 5, comprising the step of initiating the polymerizations by a polymerization initiator, preferable water-soluble polymerization initiators, wherein the polymerization initiator is not particularly limited and only needs to be one generally used for the polymerization of an unsaturated monomer in aqueous media.

17. A method of preparing a water-soluble polymeric structure as claimed in claim 11, wherein the polyol derivatives for the synthesis of the cationic and anionic crosslinkers, are selected from di-hydroxy terminated polyesters, polycaprolactone, polycarbonates, polyether's, polydimethylsiloxanes, polyethylene's, polybutadienes and similar polyol derivatives a molecular weight in the range of about 1000 to about 100000 Dalton and a melting point lower than 100°C.

18. A method of preparing a water-soluble polymeric structure as claimed in claim 1 or 5, wherein the tertiary amine derivatives used for the neutralization of obtained maleic acid ester based crosslinkers, are selected from non-hydroxy functional tertiary amine derivatives without nucleophilic feature such as trimethyl amine, triethyl amine, tributyl amine, triisobutyl amine, aniline, 1,4-dimethylpiperazine and all related mono, di and multi tertiary amine functional non-nucleophilic amine derivatives.

19. A method of preparing a water-soluble polymeric structure as claimed in claim 11, wherein the Di-functional activated carboxylic acids are selected from Di-anhydride derivatives such as 3,3',4,4'-Benzophenonetetracarboxylic dianhydride, 4,4'-Biphthalic Anhydride, 3,4,9,10-Perylenetetracarboxylic 3,4:9,10-dianhydride, Cyclobutane-1,2,3,4-tetracarboxylic dianhydride, 3,3',4,4'-Biphenyltetracarboxylic dianhydride, Benzophenone-3,3',4,4'-tetracarboxylic dianhydride, Bicyclo[2.2.2]oct-7-ene-2,3,5,6-tetracarboxylic dianhydride, 1,4,5,8-Naphthalenetetracarboxylic dianhydride, Tetrahydrofuran-2,3,4,5-tetracarboxylic Acid, Pyromellitic dianhydride, Perylene-3,4,9,10-tetracarboxylic dianhydride, 4,4'-Oxydiphthalic anhydride, 4,4'-(4,4'-lsopropylidenediphenoxy)bis(phthalic anhydride), and all related di-anhydride derivatives.

20. A method of preparing a water-soluble polymeric structure as claimed in claim 5, comprising the step of adding di-isocyanate functional agents, which are selected from mainly commercially available isocyanates such as Hexamethylene diisocyanate, Isophorone diisocyanate, Toluene 2,4-diisocyanate, 1,3-Phenylene diisocyanate, Diphenylmethane 4,4'-diisocyanate, Tolylene-2,4-diisocyanate, Tolylene-2,6-diisocyanate, 1,4-Phenylene diisocyanate, m-Xylylene diisocyanate, trans-1,4-Cyclohexylene diisocyanate, Poly(propylene glycol), tolylene 2,4-diisocyanate terminated, 3,3'-Dimethyl-4,4'-Biphenyl Diisocyanate, 1,4-Diisocyanatobutane, 1,12-Diisocyanatododecane, Tolylene-2,6-diisocyanate, 2-Methyl-m-phenylene diisocyanate, 1,3-Bis(1-isocyanato-1-methylethyl)benzene, 1,3-Bis(isocyanatomethyl) cyclohexane and all related di-isocyanate and di-isocyanate functional polymer derivatives.

21. A method of preparing a water-soluble polymeric structure as claimed in claim 1 or 5, wherein the hydrophobic monomers are selected form the combination of styrene and its derivatives and ethylenically unsaturated monomers which include esters of acrylic and methacrylic acid, i.e., the reaction product of acrylic and methacrylic acid and C1-C150 alcohols such as Tert-Butyl Acrylate, Butyl Acrylate, Butyl Methacrylate, Isodecyl Acrylate, Isodecyl Methacrylate, Stearyl Methacrylate, Stearyl acrylate and all related hydrophobic monomers.

22. A method of preparing a water-soluble polymeric structure as claimed in claim 18, nucleophilic group contained tertiary amines functional agents are selected from hydroxy functional tertiary amines and primary/secondary amine functional tertiary amine agents such as dimethylethanol amine, diethylethanol amine, dibutylethanol amine, diisoproylethanol amine, diisobutylethanol amine, Dimethylaminopropylamine and all related amine or hydroxy functional tertiary amine derivatives, for the synthesis of tertiary amine functional crosslinker.

## Amended claims

### Amended claims in accordance with Rule 137(2) EPC.

1. A water-soluble polymeric structure suitable for use as an emulsifier and a water-soluble crosslinker in both anionic and cationic form, for synthesizing of acrylic emulsions, prepared with hydrophobic monomers comprising:
- either at least one maleic acid ester functional water-insoluble polymer crosslinker having the terminal maleic acid ester neutralized with tertiary amine derivatives
- or at least one tertiary amine functional water-insoluble polymer crosslinker having the tertiary amine group attached to the water-insoluble polymer with urethane linkage and neutralized with acid derivatives.

2. A water-soluble polymeric structure as claimed in claim 1, wherein the polymeric structure is suitable for synthesizing of anionic and cationic acrylate-polyol hybrid emulsions.

3. A water-soluble polymeric structure as claimed in claim 1, wherein the hydrophobic monomers are Styrene and Butyl Acrylate.

4. A water-soluble polymeric structure as claimed in claim 1, wherein the polymeric structure comprising Dihydroxy terminated polymer derivatives which is reacted with maleic anhydride with or without a tertiary amine catalyst.

5. A method of preparing an acrylic emulsion comprising the water-soluble polymeric structure of claim 1, wherein the maleic acid ester functional water-insoluble polymer crosslinker eliminates the possibility of self-polymerization of crosslinker, the method comprising the steps of:
- obtaining maleic acid ester functional crosslinker by adding Dihydroxy terminated polymer derivatives and reacting them with maleic anhydride,
- making a homogenous mixture Styrene and Butyl Acrylate as hydrophobic monomers and maleic acid ester functional polymer crosslinker solution which was prepared at room temperature and without using any surface-active additives.

6. A method of preparing an acrylic emulsion as claimed in claim 5, wherein the homogeneous distribution of monomers and crosslinkers on main polymeric structure are enabled, and the neutralized maleic acid ester functional polymers are also behaved as emulsifier to emulsify the water insoluble monomers during the emulsion polymerization.

7. A method of preparing an acrylic emulsion as claimed in claim 5, comprising the step of obtaining maleic acid ester functional crosslinker by adding Dihydroxy terminated polymer derivatives and reacting them with maleic anhydride in the presence of tertiary amine catalyst to increase reaction yield.

8. A method of preparing an acrylic emulsion as claimed in claim 7, wherein the catalyst also yields the acid salt with maleic acid moiety after ring opening reaction with maleic anhydride to provide water solubility.

9. A method of preparing an acrylic emulsion as claimed in claim 5, comprising the step of neutralizing with different bases such as metal hydroxy salts and conducting the reaction at a higher temperature than 70°C which causes the sublimation of maleic anhydride upside of the reaction vessel or in distillation system and prolongs the reaction time.

10. A method of preparing an acrylic emulsion as claimed in claim 5, comprising the step of copolymerizing maleic acid ester functional polymer crosslinker with other hydrophobic monomers and obtaining homogenous distribution of ionic parts in main polymer chain and forming a stable emulsion of crosslinked polymer.

11. A method of preparing an acrylic emulsion as claimed in claim 5, comprising the step of obtaining carboxylic acid functional polyols by performing esterification reactions between water insoluble polyol and Di-functional activated carboxylic acid derivatives known as dianhydrides.

12. A method of preparing an acrylic emulsion as claimed in claim 5, comprising the step of adjusting the molar ratio of polyol and di-anhydride derivatives in mol Hydroxy: mol Anhydride equal to 2 or less.

13. A method of preparing an acrylic emulsion comprising the water-soluble polymeric structure of claim 1, wherein the tertiary amine functional water-insoluble polymer crosslinker provides a stable acrylate-polyol hydride polymer emulsion, the method comprising the steps of: obtaining tertiary amine terminated polyurethanes by the reaction between hydroxy functional tertiary amine and isocyanate terminated polyol derivatives, neutralizing the tertiary amine terminated polyurethanes with acids, then emulsifying the hydrophobic monomer in water by the cationic polymer and obtaining the stable emulsifier-free cationic acrylate-polyol hybrid polymer emulsion by their emulsion polymerization.

14. A method of preparing an acrylic emulsion as claimed in claim 5, comprising the step of making the ratio of maleic acid ester functional crosslinkers or tertiary amine functional crosslinkers to hydrophobic monomers between 5-50% by mess.

15. A method of preparing an acrylic emulsion as claimed in claim 5, comprising the step of preparing the emulsion by initiating the polymerizations by a polymerization initiator.

16. A method of preparing an acrylic emulsion as claimed in claim 5, comprising the step of initiating the polymerizations by a polymerization initiator, preferable water-soluble polymerization initiators, wherein the polymerization initiator is not particularly limited and only needs to be one generally used for the polymerization of an unsaturated monomer in aqueous media.

17. A method of preparing an acrylic emulsion as claimed in claim 11, wherein the polyol derivatives for the synthesis of the cationic and anionic crosslinkers, are selected from dihydroxy terminated polyesters, polycaprolactone, polycarbonates, polyether's, polydimethylsiloxanes, polyethylene's, polybutadienes and similar polyol derivatives a molecular weight in the range of about 1000 to about 100000 Dalton and a melting point lower than 100°C.

18. A method of preparing an acrylic emulsion as claimed in claim 5, wherein the tertiary amine derivatives used for the neutralization of obtained maleic acid ester based crosslinkers, are selected from non-hydroxy functional tertiary amine derivatives without nucleophilic feature such as trimethyl amine, triethyl amine, tributyl amine, triisobutyl amine, aniline, 1,4-dimethylpiperazine and all related mono, di and multi tertiary amine functional non-nucleophilic amine derivatives.

19. A method of preparing an acrylic emulsion as claimed in claim 11, wherein the Di-functional activated carboxylic acids are selected from Di-anhydride derivatives such as 3,3',4,4'-Benzophenonetetracarboxylic dianhydride, 4,4'-Biphthalic Anhydride, 3,4,9,10-Perylenetetracarboxylic 3,4:9,10-dianhydride, Cyclobutane-1,2,3,4-tetracarboxylic dianhydride, 3,3',4,4'-Biphenyltetracarboxylic dianhydride, Benzophenone-3,3',4,4'-tetracarboxylic dianhydride, Bicyclo[2.2.2]oct-7-ene-2,3,5,6-tetracarboxylic dianhydride, 1,4,5,8-Naphthalenetetracarboxylic dianhydride, Tetrahydrofuran-2,3,4,5-tetracarboxylic Acid, Pyromellitic dianhydride, Perylene-3,4,9,10-tetracarboxylic dianhydride, 4,4'-Oxydiphthalic anhydride, 4,4'-(4,4'-Isopropylidenediphenoxy)bis(phthalic anhydride), and all related di-anhydride derivatives.

20. A method of preparing an acrylic emulsion as claimed in claim 5, comprising the step of adding di-isocyanate functional agents, which are selected from mainly commercially available isocyanates such as Hexamethylene diisocyanate, Isophorone diisocyanate, Toluene 2,4-diisocyanate, 1,3-Phenylene diisocyanate, Diphenylmethane 4,4'-diisocyanate, Tolylene-2,4-diisocyanate, Tolylene-2,6-diisocyanate, 1,4-Phenylene diisocyanate, m-Xylylene diisocyanate, trans-1,4-Cyclohexylene diisocyanate, Poly(propylene glycol), tolylene 2,4-diisocyanate terminated, 3,3'-Dimethyl-4,4'-Biphenyl Diisocyanate, 1,4-Diisocyanatobutane, 1,12-Diisocyanatododecane, Tolylene-2,6-diisocyanate, 2-Methyl-m-phenylene diisocyanate, 1,3-Bis(1-isocyanato-1-methylethyl)benzene, 1,3-Bis(isocyanatomethyl) cyclohexane and all related di-isocyanate and di-isocyanate functional polymer derivatives.

21. A method of preparing an acrylic emulsion as claimed in claim 5, wherein the hydrophobic monomers are selected form the combination of styrene and its derivatives and ethylenically unsaturated monomers which include esters of acrylic and methacrylic acid, i.e., the reaction product of acrylic and methacrylic acid and C1-C150 alcohols such as Tert-Butyl Acrylate, Butyl Acrylate, Butyl Methacrylate, Isodecyl Acrylate, Isodecyl Methacrylate, Stearyl Methacrylate, Stearyl acrylate and all related hydrophobic monomers.

22. A method of preparing an acrylic emulsion as claimed in claim 18, nucleophilic group contained tertiary amines functional agents are selected from hydroxy functional tertiary amines and primary/secondary amine functional tertiary amine agents such as dimethylethanol amine, diethylethanol amine, dibutylethanol amine, diisoproylethanol amine, diisobutylethanol amine, Dimethylaminopropylamine and all related amine or hydroxy functional tertiary amine derivatives, for the synthesis of tertiary amine functional crosslinker.
